# EUROPEAN PATENT SPECIFICATION

(11) **EP 3 944 425 B1**
(45) Date of publication and mention of the grant of the patent: **15.04.2026**
(21) Application number: 21187334.4
(22) Date of filing: 23.07.2021
(51) Int. Cl.: H01R 13/50, H01R 13/502, H01R 13/52

(54) **ANGLED HOUSING PART AND ANGLED HOUSING ASSEMBLY**
WINKELGEHÄUSETEIL UND WINKELGEHÄUSEANORDNUNG
PARTIE DE BOÎTIER À ANGLE ET ENSEMBLE DE BOÎTIER À ANGLE

(30) Priority: 24.07.2020 IT 202000017959
(43) Date of publication of application: 26.01.2022
(73) Proprietor: TE Connectivity Italia Distribution S.r.l., 10093 Collegno (TO) (IT)
(72) Inventor: Genta, Alessandro, 10093 Turin (IT); Zannini, Raoul, 10093 Turin (IT); Cezza, Claudia, 10093 Turin (IT)
(74) Representative: Grünecker Patent- und Rechtsanwälte PartG mbB

(56) References cited:
- US-A- 5 716 235
- US-A1- 2014 030 902
- US-B2- 9 431 756

## Description

The invention relates to an angled housing part for an electric connector and to an angled housing assembly.

In the art, angled housing parts for electric connectors are known. For some applications, e.g. charge inlets for electric vehicles, there is the need to manage wire inserts or exits which are arranged under an angle to one another. Different wire inserts or exits may for instance be applied for direct current or alternating current. Additionally, electric connectors need to be sealed against environmental influences, for instance against water ingress. The assembly of such an electric connector of the art requires several elements, may be cumbersome and may risk damaging elements, such as seals during assembly. Prior art solutions comprising a multitude of elements are furthermore not well suited for automation or require a time-consuming and expensive assembly procedure.

US 9,431,756 B2 concerns a waterproof linear connector that is composed of a first housing and a second housing inserted one into another. A primary sealing member is fixed to the two housings by a fixing member. The first housing is movable relative to the second housing. US 5,716,235 concerns a rear holder integral-type linear connector comprising a main body and a cover-type rear holder element positioned away from a cable or contact receptacle. The rear holder elements are connected in an integral manner with the main body via a hinge and may be tilted along a corresponding tilting direction for closing a rear portion of the connector, thereby fixing the cables in said rear portion. Holding features hold the rear holder element in place during assembly.

One aspect of the present invention is therefore to provide an angled housing part and an angled housing assembly that are less complex and easier applicable in automated processes than prior art solutions.

The present invention solves the above problem for the angled housing part mentioned in the beginning in that the angled housing part has a first section and a second section, wherein the first and the second section both comprise a flange surface. This flange surface of the first section is angled with respect to the second section, wherein a deformable bellows section is arranged between the first section and the second section, which are connected by the bellows section, and wherein the first section and the second section are, in an assembly state, arranged to be moved relative to one another upon elastic deformation of the bellows section.

Further, the present invention solves the above problem for the angled housing assembly mentioned in the beginning in that the angled housing assembly comprises an angled housing part and a complementary angled housing part, which are adapted to be joined to one another, wherein at least one of the angled housing part and the complementary angled housing part is configured according to the inventive angled housing part.

This solution allows to maintain a single integrated housing part which is simple to handle and, at the same time, allows for the application of an assembly process like for a multi-part housing which minimizes the risk of damage by handling the components individually. The inventive solution may particularly be easier applicable in automated harnessing processes than prior art solutions.

The angled housing part and the angled housing assembly may be improved by further embodiments, which will be described in the following. Those embodiments are advantageous on their own. Technical features of the embodiments described in the following may be arbitrarily combined with each other or may be omitted if the technical effect obtained with the omitted technical feature is not essential to the present invention.

The angled housing part may be a cover and the angled housing assembly may be an electric connector receiving a multitude of cables or wires.

The flange surface is in particular a surface suitable for connecting the angled housing part to a corresponding complementary angled housing part, thereby forming the angled housing assembly.

The flange surface may be comprised or may be provided adjacent to a mounting surface of the corresponding section. The mounting surface may be adapted to be connected to a corresponding complementary mounting surface of a complementary angled housing part.

The first and the second section of the angled housing part may comprise a basically flat shape. A plane may be defined, wherein parallel to said plane the corresponding first or second section may be oriented. The flange surface of a section may be oriented essentially parallel to said plane of the section or may be oriented under an angle thereto. In one embodiment, the first section and the second section may be oriented parallel to the same plane, whereas only the flange surface of the first section may be oriented under an angle to said plane and consequently to both, the first section and the second section.

The deformable bellows section may be understood as a movement joint, i.e. an assembly for holding two elements together, while allowing a relative movement between both elements. The bellows section may comprise one or more convolutions or curved sections of a bellows material, wherein the at least one convolution or curved section does not need to be closed in itself, i.e. does not need to form a closed loop. The convolution may be present only if the bellows section is compressed.

The deformable bellows section may comprise an elastic material, which may be compressible and/or stretchable, in particular in a repetitive manner. The deformation may preferably be reversible. The bellows section may therefore comprise a material of high resilience, i.e. the ability to be elastically deformed and to revert back to and un-deformed state.

Such an elastic material provided by the bellows section may connect the first section and the second section one to another.

As a general note, the first section and the second section are interchangeable and mainly distinguished for explanation. Thus, also the second section may comprise a flange surface, which is angled with respect to the first section.

The bellows section may be compressed and/or stretched, wherein the rigidity of the bellows sections material, i.e. the rigidity of the elastic material, may be a lower than a rigidity of the first and the second section.

The inventive angled housing part thus allows an easy and efficient assembly of the angled housing part for forming the electric connector. The first section and the second section are advantageously connected to one another and may thus be installed simultaneously and not in different, separate assembly steps. This renders handling and assembly of an angled housing part and the angled housing assembly easier, particularly in view of a harnessing process.

In a further advantageous embodiment of the inventive angled housing part, in an initial state, the first section and the second section are rigidly connected to one another. This embodiment has the advantage that the first section and the second section are fixed in a predetermined position relative to each other. The angled housing part, in particular the first section and the second section may in the form a monolithical structure providing the predetermined position of the first section and the second section relative to one another. The initial state may correspond to a state as-fabricated or a pre-assembly state, which is particularly advantageous for automation. This monolithic connection may extend across the bellows section.

The first section and the second section may in particular be rigidly connected to one another by at least one material bridge across the bellows section, the material bridge comprising at least one predetermined breaking zone.

In an advantageous embodiment, the at least one predetermined breaking zone may extend along the bellows section.

The at least one predetermined breaking zone may also extend essentially perpendicular to a first direction, wherein the first direction may be directed from the first section to the second section. The at least one predetermined breaking zone may be referred to as a predetermined breaking point and may be a region of decreased stability, formed either mechanically (e.g. by a reduced thickness of the material) or chemically (a different material) or may be generated by a thermal or chemical treatment of said area. The predetermined breaking zone may extend along the gap. The material bridge may have a shape of a cone or a pyramid extending from the first section towards the second section or from the second section towards the first section, respectively. The material bridge may taper towards the predetermined breaking zone, wherein from each of the sections a cone or pyramid extends, such that two cones or pyramids are monolithically connected with one another in the predetermined breaking zone.

It is preferred that a multitude of predetermined breaking zones, i.e. a multitude of material bridges are provided to initially stabilize the position of the first section relative to the second section in the initial state.

The at least one predetermined breaking zone may thus to be adapted to allow a separation of the first section from the second section if both sections are moved relative to one another.

In an embodiment of the inventive angled housing part, the bellows section comprises an elastic material, a rigidity of the elastic material of the bellows section being lower than the rigidity of any of the first section, the second section and the material bridge. This has the advantage that a relative movement between the first section and the second section is thus conducted and realized by the bellows section, wherein stress induced to the first section and/or the second section may be minimized.

The angled housing part may comprise an assembly state. It is advantageous if, in the assembly state, the first section and the second section are separated by a gap, wherein the gap is sealingly closed by the bellows section.

The angled housing may thus comprise at least two states, the initial state, in which the first section and the second section are rigidly connected to one another, and the assembly state, in which the first section and the second section are separated from each other and arranged to be moved relative to one another. The angled housing part may be brought from the initial state into the assembly state by breaking or severing the at least one material bridge, in particular the at least one predetermined breaking zone.

In another embodiment of the present invention, the material bridge may comprise a perforation, which is filled by the material of the bellows section. The bellows section may be joined to the material of the first section by means of the corresponding perforation. The bellows section may extend basically in a direction from the first to the second section and may continue in the second section, where it is joined to the material of the second section by means of the perforation. Thereby, the bellows section may cover an intermediate section, in particular a gap between the first section and the second section. This has the advantage that the bellows section can in particular seal the intermediate section as well as any gap between the first section and the second section. The perforation may comprise at least one perforation opening and may extend parallel to the gap.

In a further advantageous embodiment of the present invention, the first section, the second section and the bellows section may form an integral multi-component molded part. Such an integral multi-component molded part is an individual element and does not require to provide a plurality of elements for assembly of an electric connector. Such an integral molded part may further be fabricated by two molding steps, e.g. by molding the material of the bellows section over the material of the first section and the second section. In particular, the material of the bellows section may be molded into the perforation of the material bridge, thereby producing a form fit between the first and the second section and the bellows section. Holding structures may thus be molded. Those structures may extend through the perforation and form anchor structures for sealing the perforation and for fixing the bellows structure to the first section and the second section. The anchor structures may be embodied in the form of a T or L or similar structure.

It is advantageous if the bellows section forms a sealing gasket between the first section and the second section and extends to the flange section of at least one of the first section and the second section. The bellows section may extend from one part of the flange section of at least one of the first section and the second section to another part of the flange section of at least one of the first section and the second section.

The bellows section / the elastic material thereof may extend from a backward facing part of the angled housing part, the backward facing part facing away from at least one of the flange of the first section and the second section.

As outlined above, the first section and the second section of the angled housing part are rigidly connected to one another in the initial state. It is advantageous if the bellows section connects the first section and the second section in a relative position close to the relative position to each other in the initial state. It is therefore advantageous if an angular tilt of the first section relative to the second section may be minimized.

Therefore, in another advantageous embodiment of the present invention, the bellows section extends from a first end to a second end of the bellows section, wherein the bellows section extends non-linearly between its first and second end.

The bellows section thus may comprise at least one curved or bent section between its first and second end. As the bellows section does not extend linearly from a first end of the bellows section to a second end of the bellows section, no hinge line is formed between the first section and the second section. Thus, a pivoting or rotating motion of the first section relative to the second section is prohibited. The bellows section thus does not extend linearly but comprises a curved shape, i.e. a shape comprising at least one curvature. In the bellows section, which forms a curved connection section, at least three points may be defined at which the first section is connected (by the corresponding portion of the bellows section) to the second section. Those three points are not located on a common line but span a plane, thereby minimizing any relative rotational movement between the first section and the second section.

Differently shaped bellows sections are conceivable. For explanation, one may define the second section of the angled housing part as a flat structure having a longitudinal extension and a transversal extension perpendicular to the longitudinal extension. At a first end of the second section, the bellows section extends along a direction parallel to the transversal direction. If viewed along a direction perpendicular to the longitudinal and to the transversal direction, the bellows section may for instance comprise a convex or concave curvature, a V-shape or may comprise at least one step. The step may be understood as the bellows section comprising at least one segment of the bellows section, which is displaced in the longitudinal direction relative to at least one adjacent second segment of the bellows section. Such an embodiment of the bellows structure may comprise two opposing steps, the shape of which may be described by a square function. Alternatively, the bellows section may have a shape that may be described by a sinus function or a triangular function.

The bellows section thus may comprise bent portions, knee-shaped or step-shaped portions or portions that are angled with respect to one another.

Further, in addition or alternatively to such a shape of the bellows section, end portions of the bellows section may be bent and extend in a direction perpendicular to the longitudinal and transversal extension of the second portion. If viewed along the longitudinal direction, the bellows section may thus comprise a U-shape.

In any case, a bellows section that does not extend along a straight line may minimize a relative rotational movement between the first section and the second section. Thus, also the angled housing part in the assembly state, i.e. with a broken/severed material bridge, may still be assembled to a complementary angled housing part for forming the electrical connector.

The flange surface may comprise a sealing gasket extending along the flange surface, wherein the flange surface is adapted for abutment to a complementary angled housing part.

A sealing gasket may be provided at both flange surfaces of the first section and of the second section. The bellow section may be directly mounted to the sealing gasket of each the first and the second section to ensure a continuous sealing. For example, the sealing gasket of each of the first and the second section may comprise an interruption at an area in which the bellows section may be inserted. In this area, the bellows section forms the sealing gasket between the first section and the second section, such that sealing between the angled housing part and the complementary angled housing part may be continuously ensured.

The flange surfaces of the first section and the second section may extend at least partially around a periphery of the corresponding section. The flange surfaces may extend from a first position at the bellows section towards a second position of the bellows section. A simple shape of such a flange surface may be the U-shape. A sealing gasket of the first or second section may be provided in or at the flange surface and may thus comprise a shape similar to the shape of the flange surface.

The inventive angled housing part may be further improved in that at least one guiding member is comprised, which is adapted to guide the angled housing part during assembly to a complementary angled housing part along an installation or mounting direction. The installation or mounting direction may be chosen in dependence on the first flange surface, which is arranged under an angle to the second section. Preferably the angle between the installation or mounting direction and the second section is smaller or equal to the angle between the flange surface of the first section and the second section. In particular, if the flange surface of the first section is oriented perpendicular to the second section, the installation or mounting direction may be oriented perpendicular to the second section, i.e. essentially parallel to the flange surface of the first section.

The at least one guiding member may be embodied as a pin, a rail, a fin or a similar mechanical sliding structure.

In another embodiment of the inventive angled housing assembly, the first section of the angled housing part may be adapted to be joined to a corresponding complementary first section of the complementary angled housing part in a first mounting direction and the second section of the angled housing part is adapted to be joined to a corresponding complementary second section of the complementary angled housing part in a second mounting direction, wherein the first and the second mounting direction are angled with respect to one another.

The first mounting direction and the second mounting direction may be oriented to each other under an angle between 30 degrees and 150 degrees, preferably between 45 degrees and 135 degrees. In a particularly advantageous embodiment, the mounting directions are oriented perpendicular to each other.

The inventive angled housing assembly may comprise an intermediate state, in which the second section is joined to the corresponding complementary second section, and wherein the first section is located at a distance to the corresponding complementary first section. More generally, the section that comprises the angled flange surface is joined to the corresponding complementary section of the complementary angled housing part.

Thus the distance, which is preferably measured along the first mounting direction, may allow mounting of the second section to the complementary second section along the second mounting direction without abutting the first section. This in particular prevents the flange surface of the first section being in mechanical contact with the complementary first section. Joining the second section to the complementary second section, the first section is moved parallel to the complementary first section without mechanically touching it. The distance between the first section and the complementary first section remains preferentially constant during joining the second section with the complementary second section. Thus, by means of the distance, a sealing gasket or a flange surface of one of the first section and the complementary first section do not touch the corresponding other one of the complementary first section and the first section. This reduces the risk of damage or unwanted displacement of any element of the angled housing assembly.

The connection between the second section and the corresponding complementary second section may be established by known fixation means as screws, bolts, rivets and the like.

In one embodiment of the inventive angled housing assembly, the distance between the first section and the corresponding complementary first section may be reduced to zero in an assembled state of the angled housing assembly, wherein in the assembled state, the sections of the angled housing part may be moved away from each other compared to the initial state.

The sections of the angled housing part may be moved away from each other along, respectively against the first mounting direction. Accordingly the bellows section may be expanded along, respectively against the first mounting direction as well. The first mounting direction may in particular be oriented perpendicular to the second mounting direction or perpendicular to the first flange surface.

The inventive angled housing assembly may be further improved in that the sealing gasket of the angled housing part and/or the complementary angled housing part comprises a precompensation region with excess sealing gasket material, wherein the precompensation region is adapted to compensate a lateral contraction of the sealing gasket in the assembled state due to longitudinal extension of the sealing gasket during the transition from the intermediate state to the assembled state. The precompensation region thus allows for equal dimensions of the sealing gasket in the assembled state and thus for constant sealing conditions along the sealing gasket.

The present invention will be described by way of exemplary examples shown in the accompanying figures. Technical features having the same or similar function and/or the same or similar structure will be denoted with the same reference numeral. Unless explicitly stated otherwise, the explanation of technical features given in one figure may be transferred to the example shown in another figure. The technical features of the embodiments shown in the figures may be arbitrarily combined with each other or may be omitted. The embodiments shown are intended for explanation and do not limit the scope of the present invention, which is defined by the claims.

The figures show:
- Fig. 1: An embodiment of an angled housing assembly;
- Fig. 2: A preform of the inventive angled housing part;
- Fig. 3: Top view of the inventive angled housing part based on the preform of Fig. 2;
- Fig. 4: Cut side view of the inventive angled housing part of Fig 3;
- Fig. 5: The angled housing assembly of Fig. 1 in an unassembled state;
- Fig. 6: Detailed cut side view of the angled housing assembly of Fig. 5;
- Fig. 7: Detailed cut side view of the angled housing assembly in the assembly state;
- Fig. 8: The inventive angled housing part in the assembly state in a cut side view; and
- Fig. 9: Detailed cut side view of the inventive angled housing part in the initial state.

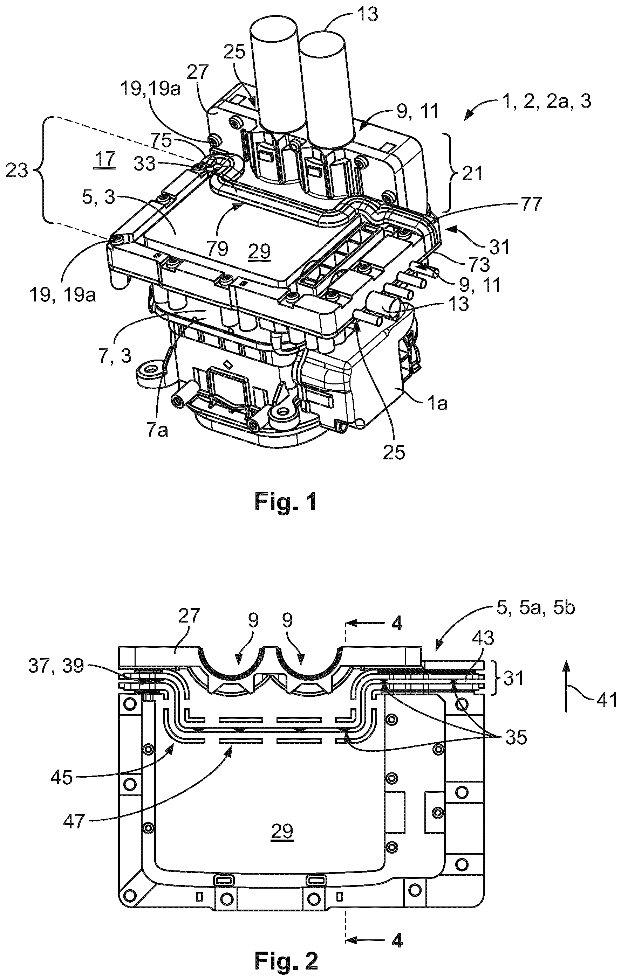

Fig. 1 shows an inventive angled housing assembly 1 in an assembly state 3, in which an angled housing part 5 and a complementary angled housing part 7 are joined to one another. Both, the angled housing part 5 and the complementary angled housing part 7 are in the assembly state 3.

The complementary angled housing part 7 is attached to a connecting structure 1a. The connecting structure 1a may be a part of an electrical connector 2, which, in the embodiment shown, is an angled electrical connector 2a.

The angled electrical connector 2a comprises a vertical flange portion 21 and a horizontal flange portion 23 . **It** is noted that the labeling vertical and horizontal does not limit those portions, as the actual orientation may change if the entire 90° angled electrical connector 2a is rotated.

The angled housing part 5 and the complementary angled housing part 7 each comprise a cable insertion portion 25, which are essentially oriented perpendicular to each other. It is also conceivable that three or four or more of such cable insertion portions 25 may be provided that allow insertion of at least one cable 13 from different directions.

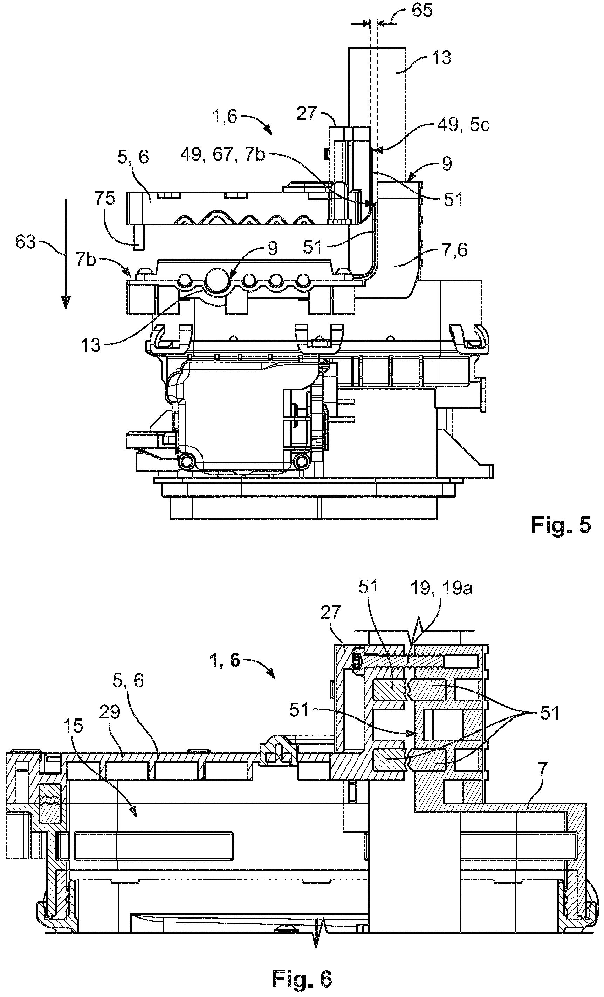

The complementary angled housing part 7 comprises a housing shell 7a and a flange section 7b, which is not shown in Fig. 1 but may be seen in Fig. 5.

In the assembly state 3, cable channels 9 of the angled housing part 5 and the complementary angled housing part 7 form cable openings 11. When cables 13 are received in the corresponding cable openings 11 formed by the corresponding cable channels 9, an interior 15 (see Fig. 6) is sealed against an outside 17. In Fig. 1 only two cable channels 9 and cable openings 11 are shown. Further, only two cables 13 are provided with reference numerals for the sake of visibility. The angled housing part 5 and the complementary angled housing part 7 are held at each other, in particular are pressed against each other by fixation means 19, e.g. screws 19a. again, for the sake of simplicity and visibility only one fixation means 19, embodied as a screw 19a is provided with a reference numeral. Further possible fixation means 19 are rivets, bolts or a combination of those, which are not shown.

The angled housing part 5 comprises a first section 27 and a second section 29, which, in the embodiment shown, are oriented perpendicularly to one another. The first 27 and the second section 29 are connected to one another by a deformable bellows section 31, which is arranged between the first section 27 and the second section 29.

The bellows section 31 comprises an elastic material 33 that allows for the first section 27 and the second section 29 to be moved relative to one another upon elastic deformation of the bellows section 31, i.e. upon elastic deformation of the elastic material 33. The bellows section 31 has a non-linear shape.

As can be seen, both, the first section 27 and the second section 29 are attached to the complementary angled housing part 7 by fixation means 19.

The following explanation refers to the inventive angled housing part 5 shown in Fig. 2, Fig. 3 and Fig. 4.

In Fig. 2, a preform 5a of the inventive angled housing part 5 is shown in a top view. The first section 27 extends out of the drawing plane, whereas the second section 29 is oriented under an angle of 90 degrees thereto. The cable channels 9 of the first section 27 are clearly visible.

Between the first section 27 and the second section 29 at least one material bridge 35 across the bellows section 31 is provided, which rigidly connects the first 27 and the second section 29. The embodiment shown comprises seven material bridges 35, which are embodied as opposing pyramids 37, each of which comprising a predetermined breaking zone 39.

The predetermined breaking zones 39 extend essentially perpendicular to a first direction 41 directed from the second section 29 to the first section 27. The material bridges 35 that comprise the predetermined breaking zones 39 extend along a gap 43 formed in the bellows section 31. The first direction may be referred to as first mounting direction.

By means of the material bridges 35 the angled housing part 5 thus forms a monolithic structure 5b, wherein a position of the first section 27 with respect to the second section 29 is clearly determined and fixed.

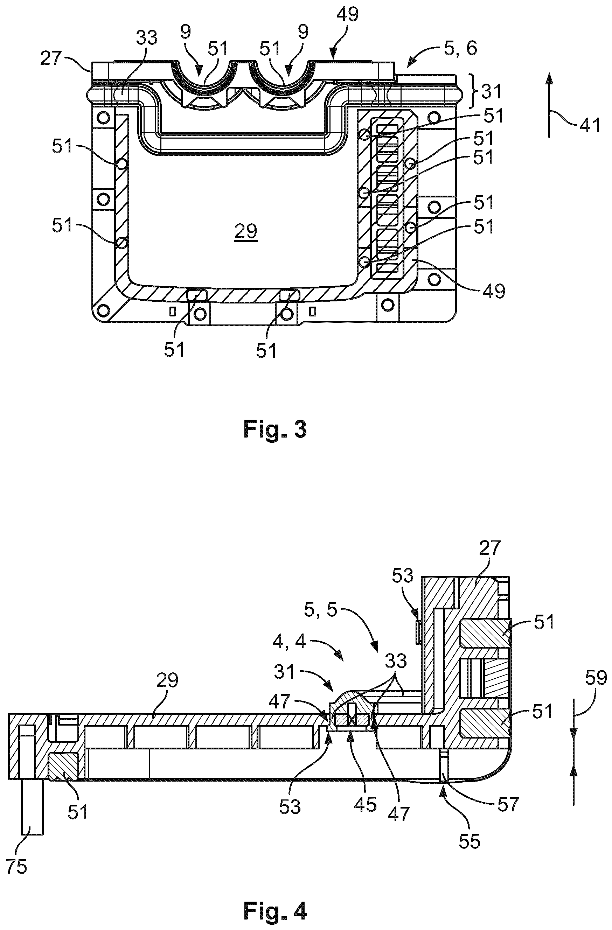

Further, the bellows section 31 shows a perforation 45 comprising perforation openings 47, which will be explained in more detail with reference to Fig. 4.

Fig. 3 shows the inventive angled housing part 5 in an initial state 6. In Fig. 3 (as compared to the preform 5a of Fig. 2), the bellows section 31 further comprises the elastic material 33. Additionally, the angled housing part 5 comprises a sealing gasket 51 that extends along a flange surface 49 of the second section 29 as well as along a flange surface 49 of the first section 27. The flange surface 49 of the first section 27 faces in the first mounting direction 41. In both sections 27, 29, the sealing gasket 51 also extends along the cable channels 9.

In the second section 29, the sealing gasket 51 is visible via through-holes that are not referred to by a reference numeral. The flange surface 49 of the second section 29 is essentially U-shaped and indicated by a shading, as it faces into the drawing plane and is not visible in this top view.

In Fig. 4, the embodiment of the inventive angled housing part 5 of Fig. 3 is shown in the initial state 6 in a cut side view along A-A (see Fig. 1).

As can be seen in this figure, the perforation 45, in particular the perforation openings 47 are filled by the elastic material 33 of the bellows section 31, thereby sealingly closing the gap 43. Additionally, anchor structures 53 are formed for fixing the bellows section 31 to the first section 27 and to the second section 29 through perforation openings 47. Preferably, the anchor structures 53 may provide a corresponding form fit between the first 27 and the second section 29 and the bellows section 31. The anchor structures 53 may be molded and extend through the perforation 45, in particular the perforation openings 47. The anchor structures 53 may also be provided at the first section 27 by the sealing gasket 51 and may be adapted for sealing the perforation 45 and for fixing the bellows structure 31 to the first section 27 and the second section 29, respectively. The anchor structures 53 shown are embodied in the form of a T but may comprise different shapes, e.g. the form of an L or a similar structure.

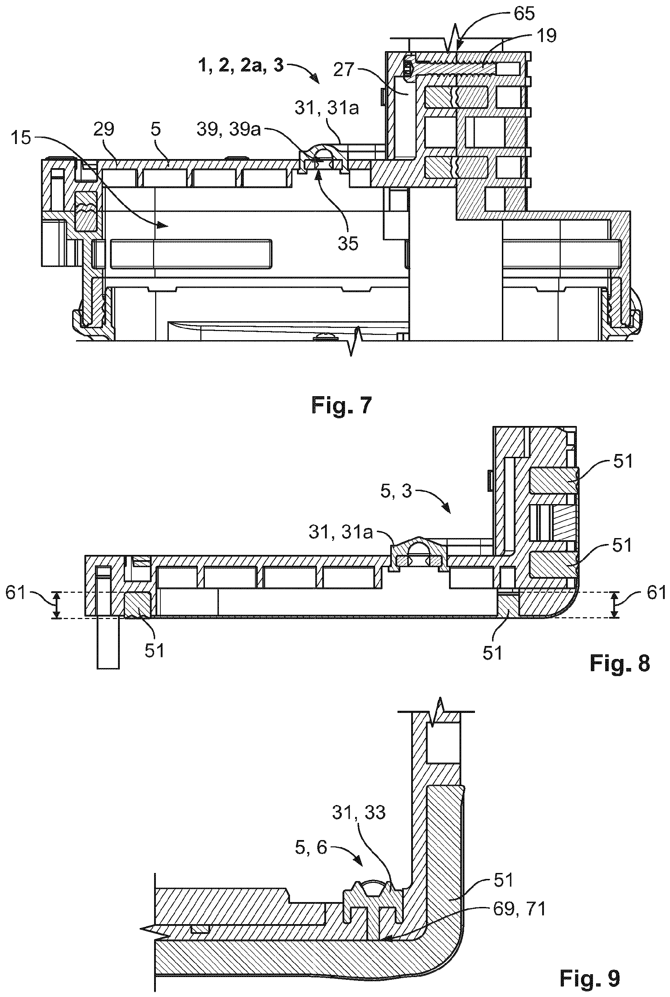

In Fig. 4, a precompensation region 55 of the sealing gasket 51 is shown. In this precompensation region 55 excess sealing gasket material 57 is provided to compensate a lateral contraction 59 of the sealing gasket 51 in the assembly state 3. In particular in comparison to the cut side view shown in Fig. 8, the effect of the precompensation region 55 is clearly visible, namely to provide an equal thickness 61 of the sealing gasket 51 in the assembly state 3 (see Fig. 8). The angled housing part 5 further comprises at least one guiding member 75, preferably two guiding members 75.

Figs. 5 to 7 concern the assembly process of the angled housing assembly 1.

In Fig. 5, the angled housing assembly 1, the angled housing part 5 as well as the complementary angled housing part 7 are shown in the initial state 6.

The cables 13 are received in the corresponding cable channels 9 and the angled housing part 5 is moved along a second mounting direction 63 (also: installation direction) towards the complementary angled housing part 7. In doing so, the flange surface 49 of a first flange section 5c of the first section 27 is located at a distance 65 to the flange section 7b of a complementary first section 67 of the complementary angled housing part 7. Thus, the sealing gasket 51 of the complementary angled housing part 7 and the angled housing part 5 may be moved relative to one another without touching each other, thereby preventing any damage. This can also be seen in the cut side view shown in Fig. 6, which additionally shows a fixation means 19 in the form of a screw 19a provided in the first section 27. The movement of the angled housing part 5 along the second mounting direction 63 is supported by the at least one guiding member 75, preferably two guiding members 75. If two guiding members 75 are provided, the two guiding members may be arranged spaced apart essentially perpendicular to the second mounting direction 63, such that the movement of the angled housing part 5 along the second mounting direction 63 is smoothened by the two spaced apart guiding members.

Also in Fig. 6, the angled housing part 5 is still in the initial state 6. Positioning of the first section 27 of the angled housing part 5 with respect to the complementary first section 67 of the complementary angled housing part 7 may thus be easily performed by positioning the second section 29 of the angled housing part 5.

Subsequently, as shown in Fig. 7, the angled housing assembly 1 Is brought into the assembly state 3 by actuating the fixation means 19. Thereby, the distance 65 is reduced to zero and the sealing gaskets 51 are pressed against one another.

In addition, the predetermined breaking zones 39 of the material bridges 35 is broken or severed, i.e. is in a broken state 39a. The bellows section 31 allows for this relative movement of the first section 27 with respect to the second section 29 and is brought into a stretched state 31a.

In the assembly state 3, the first section 27 and the second section 29 of the angled housing part 5 are movable relative to another. With reference to Fig. 1 it is noted that the bellows section 31 has a first end 73 and a second end 75. The bellows section 31 does not extend linearly from the first end 73 to the second end 75. A three-dimensional shape of the bellows section 31 comprising curves 77 and steps 79 minimizes rotational movements of the first section 27 with respect to the second section 29. Nevertheless, the interior 15 of the angled housing assembly 1 is sealed.

Fig. 9 shows a detailed cut view of a region, where the bellows section 31 is chemically adhered to the sealing gasket 51. This figure shows the initial state 6 of the angled housing part 5. In a contact region 69, chemical adhesion 71 occurs between the bellows section 31, in particular between the elastic material 33 and the sealing gasket 51.

### Reference Numerals

- 1: angled housing assembly
- 1a: connecting structure
- 2: electrical connector
- 2a: angled electrical connector
- 3: assembly state
- 5: angled housing part
- 5a: preform
- 5b: monolithic structure
- 5c: first flange section
- 6: initial state
- 7: complementary angled housing part
- 7a: housing shell
- 7b: flange section
- 9: cable channel
- 11: cable opening
- 13: cable
- 15: interior
- 17: outside
- 19: fixation means
- 19a: screw
- 21: vertical flange portion
- 23: horizontal flange portion
- 25: cable insertion portion
- 27: first section
- 29: second section
- 31: deformable bellows section
- 31a: stretched state
- 33: elastic material
- 35: material bridge
- 37: pyramids
- 39: predetermined breaking zone
- 39a: broken state
- 41: first mounting direction
- 43: gap
- 45: perforation
- 47: perforation opening
- 49: flange surface
- 51: sealing gasket
- 53: anchor structure
- 55: precompensation region
- 57: excess sealing gasket material
- 59: lateral contraction
- 61: thickness
- 63: second mounting direction
- 65: distance
- 67: complementary first section
- 69: contact region
- 71: chemical adhesion
- 73: first end
- 75: second end
- 77: curve
- 79: step

## Claims

1. Angled housing part (5) for an electric connector (2), the angled housing part (5) having a first section (27) and a second section (29), the first (27) and the second section (29) both comprising a flange surface (49), the flange surface (49) of the first section (27) being angled with respect to the second section (29), wherein a deformable bellows section (31) is arranged between the first section (27) and the second section (29), and wherein the first section (27) and the second section (27) are, in an assembly state, arranged to be moved relative to one another upon elastic deformation of the bellows section (31).

2. Angled housing part (5) according to claim 1, wherein, in an initial state (6), the first section (27) and the second section (29) are rigidly connected to one another.

3. Angled housing part (5) according to claim 2, wherein, in the initial state, the first section (27) and the second section (29) are rigidly connected to one another by at least one material bridge (35) across the bellows section (31), the at least one material bridge (35) comprising at least one predetermined breaking zone (39), which extends along the bellows section (31).

4. Angled housing part (5) according to claim 3, wherein the bellows section (31) comprises an elastic material (33), a rigidity of the elastic material (33) of the bellows section (31) is lower than the rigidity of any of the first section (27), the second section (29) and the material bridge (35).

5. Angled housing part (5) according to any one of claims 2 to 4, wherein, in the assembly state (3), the first section (27) and the second section (29) are separated by a gap which is sealingly closed by the bellows section (31).

6. Angled housing part (5) according to any one of claims 3 to 5, wherein the material bridge (35) comprises a perforation (45), which is filled by the material of the bellows section (31).

7. Angled housing part (5) according to any one of claims 1 to 6, wherein the first section (27), the second section (29) and the bellows section (31) form an integral multi-component molded part.

8. Angled housing part (5) according to any one of claims 1 to 7, wherein the bellows section (31) forms a sealing gasket (51) between the first section (27) and the second section (29) and extends to the flange section (49) of at least one of the first section (27) and the second section (29).

9. Angled housing part (5) according to any one of claims 1 to 8, wherein the bellows section (31) extends from a first end (73) to a second end (75) of the bellows section (31), wherein the bellows section (31) extents non-linearly between its first (73) and second end (75).

10. Angled housing part (5) according to any one of claims 1 to 9, comprising at least one guiding member (75), which is adapted to guide the angled housing part (5) during assembly to a complementary angled housing part (7) along a second mounting direction (63) that is essentially parallel to the flange surface (49) of the first section (27).

11. Angled housing assembly (1) comprising an angled housing part (5) and a complementary angled housing part (7), which are adapted to be joined to one another, wherein at least one of the angled housing part (5) and the complementary angled housing part (7) is configured according to any one of claims 1 to 10.

12. Angled housing assembly (1) according to claim 11, wherein the first section (27) of the angled housing part (5) is adapted to be joined to a corresponding complementary first section (67) of the complementary angled housing part (7) in a first mounting direction (41) and the second section (29) of the angled housing part (5) is adapted to be joined to a corresponding complementary second section of the complementary angled housing part in a second mounting direction (63), the first and the second mounting direction being angled with respect to another.

13. Angled housing assembly (1) according to claim 12, wherein, in an intermediate state, of mounting the angled housing assembly (1), the second section (29) is joined to the corresponding complementary second section, and wherein the first section (27) is located at a distance (65) to the corresponding complementary first section (67).

14. Angled housing assembly (1) according to claim 13, wherein the distance (65) between the first section (27) and the corresponding complementary first section is reduced to zero in an assembly state (3) of the angled housing assembly (1), wherein in the assembly state (3), the sections (27, 29) of the angled housing part (5) are moved away from each other compared to the initial state (6).

15. Angled housing assembly (1) according to claim 14, wherein the sealing gasket (51) of the angled housing part (5) and/or the complementary angled housing part (7) comprises a precompensation region (55) with excess sealing gasket material (57), wherein the precompensation region (55) is adapted to compensate a lateral contraction (59) of the sealing gasket (51) in the assembly state (3) due to longitudinal extension of the sealing gasket (51) during the transition from the intermediate state to the assembly state (3).

## Patentansprüche

1. Abgewinkeltes Gehäuseteil (5) für einen elektrischen Verbinder (2), wobei das abgewinkelte Gehäuseteil (5) einen ersten Abschnitt (27) sowie einen zweiten Abschnitt (29) aufweist, der erste Abschnitt (27) und der zweite Abschnitt (29) beide eine Flanschfläche (49) umfassen, wobei die Flanschfläche (49) des ersten Abschnitts (27) in Bezug auf den zweiten Abschnitt (29) abgewinkelt ist, ein verformbarer Balgabschnitt (31) zwischen dem ersten Abschnitt (27) und dem zweiten Abschnitt (29) angeordnet ist und der erste Abschnitt (27) und der zweite Abschnitt (29) so eingerichtet sind, dass sie in einem Zusammenbauzustand bei elastischer Verformung des Balgabschnitts (31) relativ zueinander bewegt werden.

2. Abgewinkeltes Gehäuseteil (5) nach Anspruch 1, wobei in einem Anfangszustand (6) der erste Abschnitt (27) und der zweite Abschnitt (29) starr miteinander verbunden sind.

3. Abgewinkeltes Gehäuseteil (5) nach Anspruch 2, wobei in dem Anfangszustand der erste Abschnitt (27) und der zweite Abschnitt (29) mittels wenigstens einer Materialbrücke (35) über den Balgabschnitt (31) starr miteinander verbunden sind, wobei die wenigstens eine Materialbrücke (35) wenigstens eine vorgegebene Bruchzone (39) umfasst, die sich an dem Balgabschnitt (31) entlang erstreckt.

4. Abgewinkeltes Gehäuseteil (5) nach Anspruch 3, wobei der Balgabschnitt (31) ein elastisches Material (33) umfasst und eine Steifigkeit des elastischen Materials (33) des Balgabschnitts (31) niedriger ist als die Steifigkeit des ersten Abschnitts (27), des zweiten Abschnitts (29) und der Materialbrücke (35).

5. Abgewinkeltes Gehäuseteil (5) nach einem der Ansprüche 2 bis 4, wobei in dem Zusammenbauzustand (3) der erste Abschnitt (27) und der zweite Abschnitt (29) um einen Spalt getrennt sind, der von dem Balgabschnitt (31) abdichtend verschlossen wird.

6. Abgewinkeltes Gehäuseteil (5) nach einem der Ansprüche 3 bis 5, wobei die Materialbrücke (35) eine Perforation (45) umfasst, die mit dem Material des Balgabschnitts (31) gefüllt ist.

7. Abgewinkeltes Gehäuseteil (5) nach einem der Ansprüche 1 bis 6, wobei der erste Abschnitt (27), der zweite Abschnitt (29) und der Balgabschnitt (31) ein integrales Mehrkomponenten-Formteil bilden.

8. Abgewinkeltes Gehäuseteil (5) nach einem der Ansprüche 1 bis 7, wobei der Balgabschnitt (31) eine Dichtung (51) zwischen dem ersten Abschnitt (27) und dem zweiten Abschnitt (29) aufweist und sich zu dem Flanschabschnitt (49) des ersten Abschnitts (27) oder/und des zweiten Abschnitts (29) erstreckt.

9. Abgewinkeltes Gehäuseteil (5) nach einem der Ansprüche 1 bis 8, wobei sich der Balgabschnitt (31) von einem ersten Ende (73) zu einem zweiten Ende (75) des Balgabschnitts (31) erstreckt und sich der Balgabschnitt (31) nichtlinear zwischen seinem ersten Ende (73) und seinem zweiten Ende (75) erstreckt.

10. Abgewinkeltes Gehäuseteil (5) nach einem der Ansprüche 1 bis 9, das wenigstens ein Führungselement (75) umfasst, das so eingerichtet ist, dass es das abgewinkelte Gehäuseteil (5) bei Zusammenbau in einer zweiten Montagerichtung (63), die im Wesentlichen parallel zu dem Flanschabschnitt (49) des ersten Abschnitts (27) ist, zu einem komplementären abgewinkelten Gehäuseteil (7) führt.

11. Abgewinkelte Gehäuseanordnung (1), die ein abgewinkeltes Gehäuseteil (5) sowie ein komplementäres abgewinkeltes Gehäuseteil (7) umfasst, die zum Verbinden miteinander eingerichtet sind, wobei das abgewinkelte Gehäuseteil (5) oder/und das komplementäre abgewinkelte Gehäuseteil (7) gemäß einem der Ansprüche 1 bis 10 ausgeführt ist/sind.

12. Abgewinkelte Gehäuseanordnung (1) nach Anspruch 11, wobei der erste Abschnitt (27) des abgewinkelten Gehäuseteils (5) zum Verbinden mit einem entsprechenden komplementären ersten Abschnitt (67) des komplementären abgewinkelten Gehäuseteils (7) in einer ersten Montagerichtung (41) eingerichtet ist und der zweite Abschnitt (29) des abgewinkelten Gehäuseteils (5) zum Verbinden mit einem entsprechenden komplementären zweiten Abschnitt des komplementären abgewinkelten Gehäuseteils in einer zweiten Montagerichtung (63) eingerichtet ist, wobei die erste und die zweite Montagerichtung winklig zueinander sind.

13. Abgewinkelte Gehäuseanordnung (1) nach Anspruch 12, wobei in einem Zwischenzustand beim Montieren der abgewinkelten Gehäuseanordnung (1) der zweite Abschnitt (29) mit dem entsprechenden komplementären zweiten Abschnitt verbunden ist und sich der erste Abschnitt (27) in einem Abstand (65) zu dem entsprechenden komplementären ersten Abschnitt (67) befindet.

14. Abgewinkelte Gehäuseanordnung (1) nach Anspruch 13, wobei der Abstand (65) zwischen dem ersten Abschnitt (27) und dem entsprechenden komplementären ersten Abschnitt in einem Zusammenbauzustand (3) der abgewinkelten Gehäuseanordnung (1) auf Null reduziert ist und in dem Zusammenbauzustand (3) die Abschnitte (27, 29) des abgewinkelten Gehäuseteils (5) gegenüber dem Anfangszustand (6) voneinander weg bewegt sind.

15. Abgewinkelte Gehäuseanordnung (1) nach Anspruch 14, wobei die Dichtung (51) des abgewinkelten Gehäuseteils (5) und/oder des komplementären abgewinkelten Gehäuseteils (7) einen Vorkompensationsbereich (55) mit überschüssigem Dichtungsmaterial (57) umfasst, wobei der Vorkompensationsbereich (55) so eingerichtet ist, dass er eine seitliche Verkürzung (59) der Dichtung (51) in dem Zusammenbauzustand (3) aufgrund von Längsausdehnung der Dichtung (51) beim Übergang von dem Zwischenzustand zu dem Zusammenbauzustand (3) kompensiert.

## Revendications

1. Partie de boîtier inclinée (5) pour un connecteur électrique (2), la partie de boîtier inclinée (5) comportant une première section (27) et une deuxième section (29), la première section (27) et la deuxième section (29) comprenant toutes deux une surface de bride (49), la surface de bride (49) de la première section (27) étant inclinée par rapport à la deuxième section (29), dans laquelle une section de soufflet déformable (31) est agencée entre la première section (27) et la deuxième section (29), et dans laquelle la première section (27) et la deuxième section (29) sont, à l'état assemblé, agencées pour être déplacées l'une par rapport à l'autre lors d'une déformation élastique de la section de soufflet (31).

2. Partie de boîtier inclinée (5) selon la revendication 1, dans laquelle, dans un état initial (6), la première section (27) et la deuxième section (29) sont connectées rigidement l'une à l'autre.

3. Partie de boîtier inclinée (5) selon la revendication 2, dans laquelle, à l'état initial, la première section (27) et la deuxième section (29) sont connectées rigidement l'une à l'autre par au moins un pont de matériau (35) traversant la section de soufflet (31), ledit au moins un pont de matériau (35) comprenant au moins une zone de rupture prédéterminée (39), qui s'étend le long de la section de soufflet (31).

4. Partie de boîtier inclinée (5) selon la revendication 3, dans laquelle la section de soufflet (31) comprend un matériau élastique (33), et la rigidité du matériau élastique (33) de la section de soufflet (31) est inférieure à la rigidité d'un élément quelconque parmi la première section (27), la deuxième section (29) et le pont de matériau (35).

5. Partie de boîtier inclinée (5) selon l'une quelconque des revendications 2 à 4, dans laquelle, à l'état assemblé (3), la première section (27) et la deuxième section (29) sont séparées par un intervalle qui est fermé de manière étanche par la section de soufflet (31).

6. Partie de boîtier inclinée (5) selon l'une quelconque des revendications 3 à 5, dans laquelle le pont de matériau (35) comprend une perforation (45) qui est remplie par le matériau de la section de soufflet (31).

7. Partie de boîtier inclinée (5) selon l'une quelconque des revendications 1 à 6, dans laquelle la première section (27), la deuxième section (29) et la section de soufflet (31) forment une pièce moulée intégrale à plusieurs composants.

8. Partie de boîtier inclinée (5) selon l'une quelconque des revendications 1 à 7, dans laquelle la section de soufflet (31) forme un joint d'étanchéité (51) entre la première section (27) et la deuxième section (29) et s'étend jusqu'à la section de bride (49) d'au moins une section parmi la première section (27) et la deuxième section (29).

9. Partie de boîtier inclinée (5) selon l'une quelconque des revendications 1 à 8, dans laquelle la section de soufflet (31) s'étend d'une première extrémité (73) à une deuxième extrémité (75) de la section de soufflet (31), dans laquelle la section de soufflet (31) s'étend de manière non linéaire entre sa première extrémité (73) et sa deuxième extrémité (75).

10. Partie de boîtier inclinée (5) selon l'une quelconque des revendications 1 à 9, comprenant au moins un élément de guidage (75) qui est adapté pour guider la partie de boîtier inclinée (5) durant l'assemblage à une partie de boîtier inclinée complémentaire (7) selon une deuxième direction de montage (63) qui est essentiellement parallèle à la surface de bride (49) de la première section (27).

11. Ensemble de boîtier incliné (1) comprenant une partie de boîtier inclinée (5) et une partie de boîtier inclinée complémentaire (7) qui sont adaptées pour être jointes l'une à l'autre, dans lequel au moins une partie parmi la partie de boîtier inclinée (5) et la partie de boîtier inclinée complémentaire (7) est configurée selon l'une quelconque des revendications 1 à 10.

12. Ensemble de boîtier incliné (1) selon la revendication 11, dans lequel la première section (27) de la partie de boîtier inclinée (5) est adaptée pour être jointe à une première section complémentaire correspondante (67) de la partie de boîtier inclinée complémentaire (7) dans une première direction de montage (41), et la deuxième section (29) de la partie de boîtier inclinée (5) est adaptée pour être jointe à une deuxième section complémentaire correspondante de la partie de boîtier inclinée complémentaire dans une deuxième direction de montage (63), les première et deuxième directions de montage étant inclinées l'une par rapport à l'autre.

13. Ensemble de boîtier incliné (1) selon la revendication 12, dans lequel, dans un état intermédiaire de montage de l'ensemble de boîtier incliné (1), la deuxième section (29) est jointe à la deuxième section complémentaire correspondante, et dans lequel la première section (27) est située à une distance (65) de la première section complémentaire correspondante (67).

14. Ensemble de boîtier incliné (1) selon la revendication 13, dans lequel la distance (65) entre la première section (27) et la première section complémentaire correspondante est réduite à zéro dans un état assemblé (3) de l'ensemble de boîtier incliné (1), dans lequel, à l'état assemblé (3), les sections (27, 29) de la partie de boîtier inclinée (5) sont éloignées l'une de l'autre par rapport à l'état initial (6).

15. Ensemble de boîtier incliné (1) selon la revendication 14, dans lequel le joint d'étanchéité (51) de la partie de boîtier inclinée (5) et/ou de la partie de boîtier inclinée complémentaire (7) comprend une région de précompensation (55) avec un excès de matériau de joint d'étanchéité (57), dans lequel la région de précompensation (55) est adaptée pour compenser une contraction latérale (59) du joint d'étanchéité (51) à l'état assemblé (3) due à une extension longitudinale du joint d'étanchéité (51) durant la transition de l'état intermédiaire à l'état assemblé (3).
